(19) Europäisches Patentamt
European Patent Office
Office européen des brevets

(11) **EP 4 708 072 A1**

(12) **EUROPEAN PATENT APPLICATION**
published in accordance with Art. 153(4) EPC

(43) Date of publication:
**11.03.2026 Bulletin 2026/11**

(51) International Patent Classification (IPC):
*G06F 16/332* (2025.01)    *G06V 20/58* (2022.01)

(21) Application number: 24814436.2

(22) Date of filing: **28.05.2024**

(86) International application number:
**PCT/CN2024/095786**

(87) International publication number:
**WO 2024/245239 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.06.2023 CN 202310645412**

(71) Applicant: **Huawei Technologies Co., Ltd.
Shenzhen, Guangdong 518129 (CN)**

(72) Inventors:
• **YE, Chaoqiang
Shenzhen, Guangdong 518129 (CN)**
• **ZHANG, Wei
Shenzhen, Guangdong 518129 (CN)**
• **ZHUANG, Yuzheng
Shenzhen, Guangdong 518129 (CN)**
• **HAO, Jianye
Shenzhen, Guangdong 518129 (CN)**
• **QIAN, Li
Shenzhen, Guangdong 518129 (CN)**

(74) Representative: **Goddar, Heinz J. et al
Boehmert & Boehmert
Anwaltspartnerschaft mbB
Pettenkoferstrasse 22
80336 München (DE)**

(54) **DATA PROCESSING METHOD AND RELATED APPARATUS THEREFOR**

(57)    A data processing method is applied to the field of artificial intelligence, and includes: obtaining scenario information based on sensor data and a first prompt text by using a first language model, where a target object is a vehicle or a robot; generating a second prompt text based on the scenario information and a current execution objective of the target object by using a second language model, where the second prompt text indicates a query for information that needs to be known by the target object when the target object completes the execution objective and that is not included in the scenario information; obtaining, based on the sensor data and the second prompt text by using the first language model, a reply text corresponding to the second prompt text; and obtaining a control instruction of the target object based on the reply text, the scenario information, and the current execution objective by using the second language model.

FIG. 2

**Description**

This application claims priority to Chinese Patent Application No. 202310645412.X, filed with the China National Intellectual Property Administration on June 1, 2023 and entitled "DATA PROCESSING METHOD AND RELATED APPARATUS THEREOF", which is incorporated herein by reference in its entirety.

**TECHNICAL FIELD**

This application relates to the field of artificial intelligence, and in particular, to a data processing method and a related apparatus thereof.

**BACKGROUND**

Artificial intelligence (artificial intelligence, AI) is a theory, a method, a technology, and an application system in which human intelligence is simulated and extended by using a digital computer or a machine controlled by a digital computer, to perceive an environment, obtain knowledge, and achieve an optimal result based on the knowledge. In other words, artificial intelligence is a branch of computer science and attempts to understand essence of intelligence and produce a new intelligent machine that can react in a manner similar to human intelligence. Artificial intelligence is to research design principles and implementation methods of various intelligent machines, so that the machines have perception, inference, and decision-making functions.

For a robot or a vehicle, when automatic control is performed (for example, automatic task execution performed by the robot based on a user's task execution request, or an autonomous driving task performed by the vehicle), three tasks are usually included: a perception task, a prediction task, and a decision-making task. Autonomous driving is used as an example. The perception task includes receiving original data (an image or a laser) from a sensor as an input, and recognizing a dynamic target (for example, a size and a position of a pedestrian, and a size and a position of a vehicle) and a static element (for example, a lane line and an arrow sign on the ground) in an environment. The prediction task may be receiving original results of the dynamic and static targets obtained by the perception task, and performing prediction and inference on a movement intention of the target in the environment, and mainly predicts a future movement trajectory and a future movement intention of another vehicle. The decision-making task may be receiving a prediction result obtained by the prediction task, generating a decision-making conclusion based on the future traveling intention of the another vehicle and a navigation task of an ego vehicle, outputting a control signal, and controlling the vehicle to perform autonomous driving.

However, in an existing architecture design, functions of task modules are decoupled from each other. The task modules have a clear upstream-downstream dependency relationship, and are connected in series by predefining output interfaces of the modules. This method has advantages of strong interpretability and easy development and maintenance by module. However, due to decoupling between an upstream module and a downstream module, if an error occurs in the upstream module, a decision-making result of a downstream module is also incorrect, leading to poor control precision.

**SUMMARY**

This application provides a data processing method, which improves decision-making precision.

According to a first aspect, this application provides a data processing method. The method includes: obtaining scenario information based on sensor data and a first prompt text by using a first language model, where the sensor data is data collected from an ambient environment of a target object, the first prompt text indicates to extract, based on the sensor data, scenario information of a scenario in which the target object is located, and the target object is a vehicle or a robot; generating a second prompt text based on the scenario information and a current execution objective of the target object by using a second language model, where the second prompt text indicates a query for information that needs to be known by the target object when the target object completes the execution objective and that is not included in the scenario information; obtaining, based on the sensor data and the second prompt text by using the first language model, a reply text corresponding to the second prompt text; and obtaining a control instruction of the target object based on the reply text, the scenario information, and the current execution objective by using the second language model.

In this embodiment of this application, the second language model obtains requirement information (the second prompt text) in a form of a query text based on different scenario information, the first language model obtains the reply text based on the query text, and the reply text is transferred to the second language model for decision-making. On one hand, an end-to-end automatic control system is constructed through interaction between the first language model and the second language model. Compared with a multi-phase decision-making system, this application can improve decision-making precision. On the other hand, a language model is introduced into the architecture, so that an induction and inference capability of the big language model can be extended to a control field. An expression manner of a text of the language model is different from a conventional fixed format, and can represent infinite types of sensing requirements. This unifies manners of obtaining conclusions of various types of sensing requirements of the second language model.

In a possible implementation, the scenario information includes information that indicates a scenario category and/or information about a sensing element included in the scenario.

In a possible implementation, the target object is the vehicle, and the method further includes:

receiving a navigation instruction of a user; and
obtaining the current execution objective of the target object based on a current position of the vehicle and according to the navigation instruction.

In a possible implementation, the target object is the robot, and the method further includes:

receiving a task instruction of a user; and
obtaining the current execution objective of the target object based on a current posture of the robot and scenario map information and according to the task instruction.

In a possible implementation, the information that needs to be known and that is not included in the scenario information includes:

status information of a sensing element that is associated with the execution objective; or
an implementation of the execution objective.

In a possible implementation, the first language model and the second language model are ChatGPT, GPT-4, or ChatGLM.

According to a second aspect, this application provides a data processing apparatus. The apparatus includes: a processing module, configured to: obtain scenario information based on sensor data and a first prompt text by using a first language model, where the sensor data is data collected from an ambient environment of a target object, the first prompt text indicates to extract, based on the sensor data, scenario information of a scenario in which the target object is located, and the target object is a vehicle or a robot; generate a second prompt text based on the scenario information and a current execution objective of the target object by using a second language model, where the second prompt text indicates a query for information that needs to be known by the target object when the target object completes the execution objective and that is not included in the scenario information; obtain, based on the sensor data and the second prompt text by using the first language model, a reply text corresponding to the second prompt text; and obtain a control instruction of the target object based on the reply text, the scenario information, and the current execution objective by using the second language model.

In a possible implementation, the target object is the vehicle or the robot.

In a possible implementation, the scenario information includes information that indicates a scenario category and/or information about a sensing element included in the scenario.

In a possible implementation, the target object is the vehicle, and the apparatus further includes:

an obtaining module, configured to: receive a navigation instruction of a user; and
obtain the current execution objective of the target object based on a current position of the vehicle and according to the navigation instruction.

In a possible implementation, the target object is the robot, and the apparatus further includes:
an obtaining module, configured to: receive a task instruction of a user.

The processing module is further configured to obtain the current execution objective of the target object based on a current posture of the robot and scenario map information and according to the task instruction.

In a possible implementation, the information that needs to be known and that is not included in the scenario information includes:

status information of a sensing element that is associated with the execution objective; or
an implementation of the execution objective.

In a possible implementation, the first language model and the second language model are ChatGPT, GPT-4, or ChatGLM.

According to a third aspect, this application provides a data processing apparatus. The server includes a memory and a processor. The memory stores code, the processor is configured to execute the code, and when the code is executed, the server performs the method according to the first aspect or any possible implementation of the first aspect.

According to a fourth aspect, this application provides a vehicle. The vehicle includes the data processing apparatus according to the third aspect.

According to a fifth aspect, this application provides a robot. The vehicle includes the data processing apparatus according to the third aspect.

According to a sixth aspect, this application provides a computer storage medium. The computer storage medium stores a computer program, and when the program is executed by a computer, the computer is enabled to perform the method according to the first aspect or any possible implementation of the first aspect.

According to a seventh aspect, this application provides a computer program product. The computer program product stores instructions, and when the instructions are executed by a computer, the computer is enabled to perform the method according to the first aspect or any possible implementation of the first aspect.

According to an eighth aspect, this application provides a chip system. The chip system includes a processor, configured to support a data processing apparatus in implementing functions in the foregoing aspects, for example, sending or processing data or information in the foregoing method. In a possible design, the chip system further includes a memory. The memory is configured to store program instructions and data that are necessary for an execution device or a training device. The chip system may include a chip, or may include a chip and another discrete device.

## BRIEF DESCRIPTION OF DRAWINGS

FIG. 1a is a diagram of a structure of an artificial intelligence main framework;
FIG. 1b is a diagram of a structure of an autonomous driving apparatus;
FIG. 1c is a diagram of a structure of a robot;
FIG. 1d is a diagram of a structure of a system;
FIG. 2 is a schematic flowchart of a data processing method according to an embodiment of this application;
FIG. 3 is a schematic flowchart of a data processing method according to an embodiment of this application;
FIG. 4 is a diagram of a structure of a data processing apparatus according to an embodiment of this application;
FIG. 5 is a diagram of a structure of an execution device according to an embodiment of this application;
FIG. 6 is a diagram of a structure of a server according to an embodiment of this application; and
FIG. 7 is a diagram of a structure of a chip according to an embodiment of this application.

## DESCRIPTION OF EMBODIMENTS

The following describes embodiments of the present invention with reference to the accompanying drawings in embodiments of the present invention. Terms used in implementations of the present invention are merely intended to explain specific embodiments of the present invention, and are not intended to limit the present invention.

The following describes embodiments of this application with reference to the accompanying drawings. A person of ordinary skill in the art may know that, with development of technologies and emergence of a new scenario, the technical solutions provided in embodiments of this application are also applicable to a similar technical problem.

In this specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants are intended to cover the non-exclusive inclusion, so that a process, method, system, product, or device that includes a series of units is not necessarily limited to those units, but may include other units not expressly listed or inherent to such a process, method, product, or device.

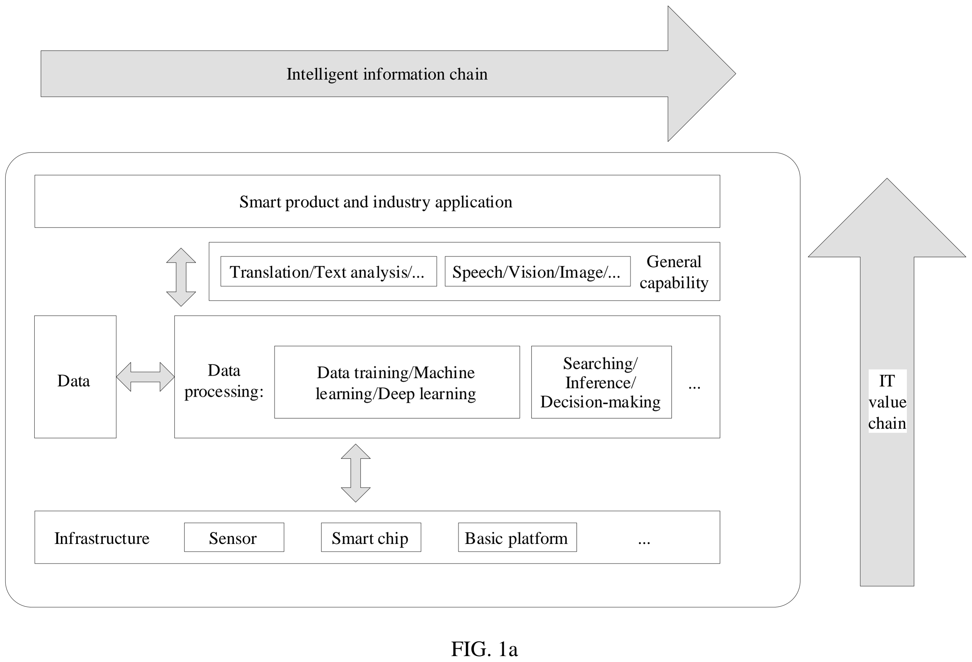

An overall working procedure of an artificial intelligence system is first described. FIG. 1a is diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside by using sensors. A computing capability is provided by smart chips (hardware acceleration chips such as a CPU, an NPU, a GPU, an ASIC, and an FPGA). The basic platforms include related platforms, for example, a distributed computing framework and a network, for assurance and support. The basic platforms may include a cloud storage and a computing network, an interconnection network, and the like. For example, the sensor communicates with the outside to obtain data, and the data is provided to a smart chip in a distributed computing system provided by the basic platform for computing.

(2) Data

Data at an upper layer of the infrastructure indicates a data source in the field of artificial intelligence. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.
Machine learning and deep learning may mean performing symbolic and formalized intelligent information modeling, extraction, preprocessing, training, and the like on data.
Inference is a process in which a human intelligent inference manner is simulated in a computer or an intelligent system, and machine thinking and problem resolving are performed by using formalized information based on an inference control policy. A typical function is searching and matching.
Decision-making is a process of making a decision after intelligent information is inferred, and usually provides functions such as classification, ranking, and prediction.

(4) General capability

After data processing mentioned above is performed on data, some general capabilities may further be formed based on a data processing result, for example, an algorithm or a general system such as translation, text analysis, computer vision processing, speech recognition, and image recognition.

(5) Smart product and industry application

The smart product and industry application are products and applications of the artificial intelligence system in various fields, and are encapsulation for an overall solution of artificial intelligence, to productize and apply intelligent information decision-making. Application fields of the intelligent information decision-making mainly include smart terminals, smart transportation, smart health care, autonomous driving, smart cities, and the like.
This application may be applied to the field of autonomous driving of vehicles or the field of control of robots.
A vehicle described in embodiments of this application may be an internal combustion engine vehicle that uses an engine as a power source, a hybrid vehicle that uses an engine and an electric motor as a power source, an electric vehicle that uses an electric motor as a power source, or the like.
In embodiments of this application, the vehicle may include an autonomous driving apparatus 100 with an autonomous driving function.

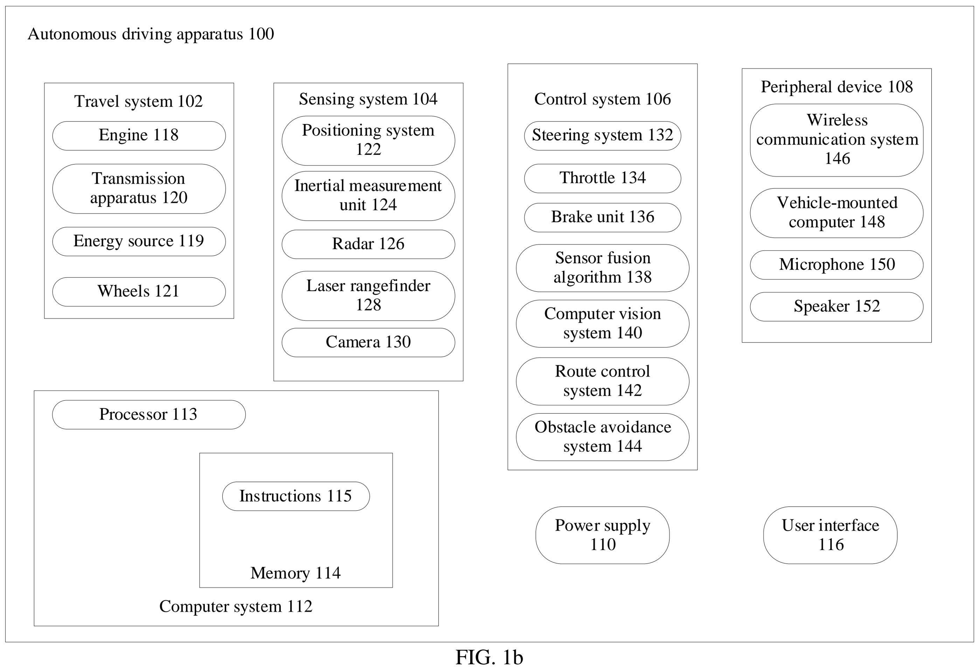

FIG. 1b is a functional block diagram of the autonomous driving apparatus 100 with the autonomous driving function according to an embodiment of this application. In an embodiment, the autonomous driving apparatus 100 may include various subsystems, for example, a travel system 102, a sensor system 104, a control system 106, one or more peripheral devices 108, a power supply 110, a computer system 112, and a user interface 116. Optionally, the autonomous driving apparatus 100 may include more or fewer subsystems, and each subsystem may include a plurality of elements. In addition, the subsystems and the elements of the autonomous driving apparatus 100 may be all interconnected in a wired or wireless manner.
The travel system 102 may include a component providing power to the autonomous driving apparatus 100 for moving. In an embodiment, the travel system 102 may include an engine 118, an energy source 119, a transmission apparatus 120, and wheels/tires 121. The engine 118 may be an internal combustion engine, an electric motor, an air compression engine, or another type of engine combination, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, another petroleum-based fuel, propane, another compressed gas-based fuel, ethanol, solar panels, batteries, and other power sources. The energy source 119 may further provide energy for another system of the autonomous driving apparatus 100.

The transmission apparatus 120 may transfer mechanical power from the engine 118 to the wheels 121. The transmission apparatus 120 may include a gearbox, a differential, and a drive shaft. In an embodiment, the transmission apparatus 120 may further include another device, for example, a clutch. The drive shaft may include one or more shafts that may be coupled to one or more wheels 121.

The sensor system 104 may include several sensors that sense information about an ambient environment of the autonomous driving apparatus 100. For example, the sensor system 104 may include a positioning system 122 (the positioning system may be a global positioning system (global positioning system, GPS), a BeiDou system, or another positioning system), an inertial measurement unit (inertial measurement unit, IMU) 124, a radar 126, a laser rangefinder 128, and a camera 130. The sensor system 104 may further include a sensor that monitors an internal system of the autonomous driving apparatus 100 (for example, an in-vehicle air quality monitor, a fuel gauge, or an oil temperature gauge). Sensor data from one or more of these sensors may be used to detect an object and corresponding features (a position, a shape, a direction, a speed, and the like) of the object. Detection and recognition are key functions for implementing a safe operation by the autonomous driving apparatus 100.

The positioning system 122 may be configured to estimate a geographical position of the autonomous driving apparatus 100. The IMU 124 is configured to sense a position and an orientation change of the autonomous driving apparatus 100 based on an inertial acceleration. In an embodiment, the IMU 124 may be a combination of an accelerometer and a gyroscope.

The radar 126 may sense an object in the ambient environment of the autonomous driving apparatus 100 by using a radio signal. In some embodiments, in addition to sensing an object, the radar 126 may be further configured to sense a speed and/or an advancing direction of the object.

The radar 126 may include an electromagnetic wave transmitting portion and a receiving portion. The radar 126 may be implemented as a pulse radar (pulse radar) mode or a continuous wave radar (continuous wave radar) mode in a principle of radio wave transmission. The radar 126 in the continuous wave radar mode may be implemented as a frequency modulated continuous wave (frequency modulated continuous wave, FMCW) mode or a frequency shift keying (frequency shift keying, FSK) mode based on a signal waveform.

The radar 126 may use an electromagnetic wave as a medium, to detect an object in a time of flight (time of flight, ToF) manner or a phase-shift (phase-shift) manner, and detect a position of the detected object, a distance from the detected object, and a relative speed of the detected object. To detect an object located before, behind, or beside a vehicle, the radar 126 may be configured at an appropriate position of an exterior of the vehicle. The lidar 126 may use a laser as a medium, to detect an object in the ToF manner or the phase-shift manner, and detect a position of the detected object, a distance from the detected object, and a relative speed of the detected object.

Optionally, to detect an object located before, behind, or beside the vehicle, the lidar 126 may be configured at an appropriate position of the exterior of the vehicle.

The laser rangefinder 128 may sense, through the laser, an object in the environment in which the autonomous driving apparatus 100 is located. In some embodiments, the laser rangefinder 128 may include one or more laser sources, a laser scanner, one or more detectors, and another system component.

The camera 130 may be configured to capture a plurality of images of the ambient environment of the autonomous driving apparatus 100. The camera 130 may be a static camera or a video camera.

Optionally, to obtain a video of the exterior of the vehicle, the camera 130 may be at an appropriate position of the exterior of the vehicle. For example, to obtain a video of a front of the vehicle, the camera 130 may be configured in close proximity to a front windshield inside the vehicle. Alternatively, the camera 130 may be configured around a front bumper or a radiator grille. For example, to obtain a video of a rear of the vehicle, the camera 130 may be configured in close proximity to rear window glass inside the vehicle. Alternatively, the camera 130 may be configured around a rear bumper, a trunk, or a tailgate. For example, to obtain a video of a side of the vehicle, the camera 130 may be configured in close proximity to at least one side window inside the vehicle. Alternatively, the camera 130 may be configured around a side mirror, a mudguard, or a vehicle door.

In embodiments of this application, the sensor data and the like may be obtained based on one or more sensors in the sensor system 104.

The control system 106 controls operations of the autonomous driving apparatus 100 and components of the autonomous driving apparatus 100. The control system 106 may include various elements, including a steering system 132, a throttle 134, a brake unit 136, a sensor fusion algorithm 138, a computer vision system 140, a route control system 142, and an obstacle avoidance system 144.

The steering system 132 may be operated to adjust an advancing direction of the autonomous driving apparatus 100, for example, may be a steering wheel system in an embodiment.

The throttle 134 is configured to control an operating speed of the engine 118 and further control a speed of the autonomous driving apparatus 100.

The brake unit 136 is configured to control the autonomous driving apparatus 100 to decelerate. The brake unit 136 may use friction to slow down the wheels 121. In another embodiment, the brake unit 136 may convert kinetic energy of the wheels 121 into a current. The brake unit 136 may alternatively use another form to reduce a rotational speed of the wheels 121, to control the speed of the autonomous driving apparatus 100.

The computer vision system 140 may be operated to process and analyze an image captured by the camera 130, to recognize an object and/or a feature in the ambient environment of the autonomous driving apparatus 100. The object and/or the feature may include a traffic signal, a road boundary, and an obstacle. The computer vision system 140 may use an object recognition algorithm, a structure from motion (structure from motion, SFM) algorithm, video tracking, and another computer vision technology. In some embodiments, the computer vision system 140 may be configured to: draw a map for an environment, track an object, estimate a speed of the object, and the like.

The route control system 142 is configured to determine a traveling route of the autonomous driving apparatus 100. In some embodiments, the route control system 142 may combine data from the sensor 138, the positioning system 122, and one or more predetermined maps to determine the traveling route of the autonomous driving apparatus 100.

The obstacle avoidance system 144 is configured to recognize, evaluate, and avoid or otherwise bypass a potential obstacle in an environment of the autonomous driving apparatus 100.

Certainly, in an example, the control system 106 may be added with or alternatively include components other than those shown and described. Alternatively, some of the foregoing components may be removed.

The autonomous driving apparatus 100 interacts with an external sensor, another autonomous driving apparatus, another computer system, or a user by using the peripheral device 108. The peripheral device 108 may include a wireless communication system 146, a vehicle-mounted computer 148, a microphone 150, and/or a speaker 152.

In some embodiments, the peripheral device 108 provides a means for a user of the autonomous driving apparatus 100 to interact with the user interface 116. For example, the vehicle-mounted computer 148 may provide information for the user of the autonomous driving apparatus 100. The user interface 116 may further operate the vehicle-mounted computer 148 to receive an input of a user. The vehicle-mounted computer 148 may perform an operation through a touchscreen. In other cases, the peripheral device 108 may provide a means used by the autonomous driving apparatus 100 to communicate with another device located in the vehicle. For example, the microphone 150 may receive audio (for example, a voice command or another audio input) from the user of the autonomous driving apparatus 100. Similarly, the speaker 152 may output audio to the user of the autonomous driving apparatus 100.

The wireless communication system 146 may communicate with one or more devices directly or through a communication network in a wireless manner. For example, the wireless communication system 146 may use 3G cellular communication such as code division multiple access (code division multiple access, CDMA), EV-DO, or global system for mobile communications (global system for mobile communications, GSM)/general packet radio service (general packet radio service, GPRS), or 4G cellular communication such as long term evolution (long term evolution, LTE), or 5G cellular communication. The wireless communication system 146 may communicate with a wireless local area network (wireless local area network, WLAN) through Wi-Fi. In some embodiments, the wireless communication system 146 may directly communicate with a device through an infrared link, Bluetooth, or ZigBee. For other wireless protocols such as various autonomous driving apparatus communication systems, the wireless communication system 146 may include, for example, one or more dedicated short-range communications (dedicated short-range communications, DSRC) devices. These devices may be used for public and/or private data communication between autonomous driving apparatuses and/or between the autonomous driving apparatus and a roadside station.

The power supply 110 may supply power to the components of the autonomous driving apparatus 100. In an embodiment, the power supply 110 may be a rechargeable lithium-ion or lead-acid battery. One or more battery groups of such a battery may be configured as a power supply to supply power to the components of the autonomous driving apparatus 100. In some embodiments, the power supply 110 and the energy source 119 may be implemented together, as in some battery electric vehicles.

Some or all functions of the autonomous driving apparatus 100 are controlled by the computer system 112. The computer system 112 may include at least one processor 113. The processor 113 executes instructions 115 stored in a non-transitory computer-readable medium such as a memory 114. The computer system 112 may alternatively be a plurality of computing devices that control individual components or subsystems of the autonomous driving apparatus 100 in a distributed manner.

The processor 113 may be any conventional processor, such as a commercially available central processing unit (central processing unit, CPU). Optionally, the processor may be a dedicated device, for example, an application-specific integrated circuit (application-specific integrated circuit, ASIC) or another hardware-based processor. Although FIG. 1b functionally illustrates the processor, the memory, and other elements of the computer 110 in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer 110. Therefore, it is understood that a reference to the processor or the computer includes a reference to a set of processors or computers or memories that may or may not be operated in parallel. Different from using a single processor to perform the steps described herein, some components such as a steering component and a deceleration component may include respective processors. The processor performs only computation related to a component-specific function.

In the aspects described herein, the processor may be located far away from the autonomous driving apparatus and perform wireless communication with the autonomous driving apparatus. on the other hand, some of the processes described herein are performed on the processor disposed inside the autonomous driving apparatus, while others are performed by a remote processor, including performing a step necessary for single manipulation.

In some embodiments, the memory 114 may include the instructions 115 (for example, program logic), and the instructions 115 may be executed by the processor 113 to perform various functions of the autonomous driving apparatus 100, including those functions described above. The memory 114 may also include additional instructions, including instructions to send data to, receive data from, interact with, and/or control one or more of the travel system 102, the sensor system 104, the control system 106, and the peripheral device 108.

In addition to the instructions 115, the memory 114 may further store data such as a road map, route information, a position, a direction, and a speed of the autonomous driving apparatus, and other such autonomous driving apparatus data, and other information. Such information may be used by the autonomous driving apparatus 100 and the computer system 112 when the autonomous driving apparatus 100 operates in an autonomous mode, a semi-autonomous mode, and/or a manual mode.

A data processing method provided in embodiments of this application may be software code stored in the memory 114. In addition, models (for example, a first language model and a second language model) in embodiments of this application may be stored in the memory 114. The processor 113 may obtain the software code from the memory, and execute the obtained software code, to implement the data processing method provided in embodiments of this application. After a control signal of a target vehicle is obtained, the control signal may be transferred to the control system 106, and the control system 106 may determine a traveling policy of an ego vehicle or directly perform driving control based on the control signal.

The user interface 116 is configured to provide information for or receive information from the user of the autonomous driving apparatus 100. Optionally, the user interface 116 may include one or more input/output devices in a set of peripheral devices 108, for example, the wireless communication system 146, the vehicle-mounted computer 148, the microphone 150, and the speaker 152.

The computer system 112 may control functions of the autonomous driving apparatus 100 based inputs received from each of the subsystems (for example, the travel system 102, the sensor system 104, and the control system 106) and from the user interface 116. For example, the computer system 112 may control the steering unit 132 based on the input from the control system 106, to avoid an obstacle detected by the sensor system 104 and the obstacle avoidance system 144. In some embodiments, the computer system 112 may be operated to provide control over many aspects of the autonomous driving apparatus 100 and the subsystems of the autonomous driving apparatus 100.

Optionally, one or more of the foregoing components may be separately installed from or associated with the autonomous driving apparatus 100. For example, the memory 114 may be partially or completely separated from the autonomous driving apparatus 100. The foregoing components may be communicatively coupled together in a wired and/or wireless manner.

Optionally, the foregoing components are merely examples. During actual application, components in the foregoing modules may be added or deleted based on an actual requirement. FIG. 1b should not be understood as any limitation on embodiments of this application.

In addition, embodiments of this application may be further applied to a robot 13.

The following describes a diagram of an architecture of the robot 13.

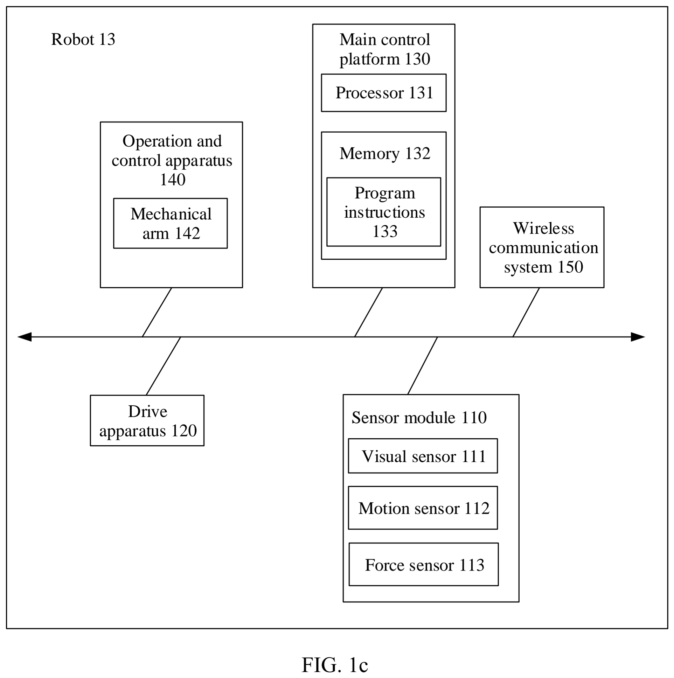

Embodiments of this application may be applied to the robot 13 shown in FIG. 1c. As shown in FIG. 1c, the robot 13 may include a sensor module 110, a drive apparatus 120, an operation and control apparatus 140, and a main control platform 130.

The sensor module 110 may include one or more visual sensors 111 (for example, a camera) (which may also be referred to as a sensor for short in embodiments of this application), for example, may include a common optical camera, or may be an infrared camera, a structured light sensor, or a time of flight (time of flight, ToF) sensor. For example, the sensor module 110 may include a common RGB camera or a red, yellow, yellow, blue (red, yellow, yellow blue, RYYB) camera, and the camera apparatus module may also include a plurality of cameras or sensors to form an RGB-D depth camera solution. For example, the RGB-D depth camera solution may include a binocular solution including two RGB cameras, a structured light solution including one RGB camera and one structured light sensor, or a ToF solution including one RGB camera and one ToF sensor. This is not specifically limited in embodiments of this application. In addition, the visual sensor 111 (for example, a camera) may be a fixed-focus camera, or may be a zoom camera, for example, has capabilities of phase focusing and laser focusing.

It should be understood that the visual sensor 111 (for example, a camera) may be carried on a motion unit. The motion unit is configured to: carry the visual sensor 111 (for example, a camera), and drive the visual sensor 111 (for example, a camera) to rotate. In an embodiment, the motion unit may drive the visual sensor 111 (for example, a camera) to generate rotation of two degrees of freedom. If a direction indicated by a Z axis is a front direction of the camera, the rotation of two degrees of freedom may include rotation of the visual sensor 111 (for example, a camera) with an x axis as a rotation axis and rotation of the visual sensor 111 (for example, a camera) with a y axis as the rotation axis. The motion unit may drive the visual sensor 111 (for example, a camera) to rotate by rotating a steering gear or a servo motor. For example, when the drive apparatus is configured to drive the visual sensor 111 (for example, a camera) to generate rotation of two degrees of freedom, the motion unit may include two drive mechanisms: driver 1 and driver 2, for example, two steering gears or two servo motors. One steering gear 1 or one servo motor 1 is configured to control rotation of the visual sensor 111 (for example, a camera) with the x axis as the rotation axis. The other steering gear 2 or the other servo motor 2 is configured to control rotation of the visual sensor 111 (for example, a camera) with the y axis as the rotation axis. In some other embodiments, the motion unit may drive the visual sensor 111 (for example, a camera) to generate rotation of three degrees of freedom. That is, rotation of the visual sensor 111 (for example, a camera) with the z axis as the rotation axis is added. Correspondingly, the motion unit may further include three drive mechanisms: driver 1, driver 2, and driver 3, for example, three steering gears or three servo motors. A steering gear 1 or a servo motor 1 is configured to control rotation of the visual sensor 111 (for example, a camera) with the x axis as the rotation axis. A steering gear 2 or a servo motor 2 is configured to control rotation of the visual sensor 111 (for example, a camera) with the y axis as the rotation axis. A steering gear 3 or a servo motor 3 is configured to control rotation of the visual sensor 111 (for example, a camera) with the z-axis as the rotation axis.

The sensor module 110 may further include a motion sensor 112. The motion sensor 112 may be an odometer, an accelerometer, a speedometer, an inertial measurement unit, or the like, and is configured to collect mileage information of the robot 13 in a traveling process, for example, information such as a trip, a track, and a speed.

A force sensor 113 may be a sensor configured to detect a force applied to an end of a robotic arm 142. The force sensor 113 may use a pressure sensor that can detect a force in a single axis direction and a force sensor or a torque sensor that can detect components of forces in a plurality of axis directions. Optionally, the force sensor 113 may use a six-axis force sensor. The six-axis force sensor detects a magnitude of a force parallel to three detection axes that are orthogonal to each other in an inherent sensor coordinate system and a magnitude of a torque around three detection axes. It should be noted that the force sensor 113 may be disposed at a position other than a position at the end of the robotic arm 142, for example, may be disposed on more than one joint of the robotic arm 142.

The drive apparatus 120 may include a component that provides power for the robot 13 to move. In an embodiment, the drive apparatus 120 may include an engine, an energy source, a transmission apparatus, and wheels/tires. The engine may be an internal combustion engine, a motor, an air compression engine, or another type of engine combination, for example, a hybrid engine including a gasoline engine and a motor, or a hybrid engine including an internal combustion engine and an air compression engine. The engine converts the energy source into mechanical energy.

Examples of the energy source include gasoline, diesel, another petroleum-based fuel, propane, another compressed gas-based fuel, ethanol, solar panels, batteries, and other power sources. The energy source may also provide energy for another system of the robot 13.

The transmission apparatus may transfer mechanical power from the engine to the wheels. The transmission apparatus may include a differential and a drive shaft. In an embodiment, the transmission apparatus may further include another device, for example, a clutch. The drive shaft may include one or more shafts that may be coupled to one or more wheels.

The main control platform 130 is a data processing and control center of the apparatus. The main control platform 130 establishes communication connections to the operation and control apparatus 140, the sensor module 110, and the drive apparatus 120, for example, can receive image data collected by the sensor module 110, process the image data, and send a movement instruction to the drive apparatus 120. The operation and control apparatus 140 may include the robotic arm 142. In some embodiments, the main control platform 130 may be an embedded computer platform, and includes but is not limited to a computer chip and a software system that are designed based on an X86 instruction set, an ARM instruction set, a RISC-V instruction set, an MIPS instruction set, or the like. The main control platform 130 may perform, by using a control instruction, control over a posture of the robotic arm 142 to execute a task.

In an embodiment, the computer chip may include, for example, a processor 131 and a memory 132. The processor 131 may include, for example, a central processing unit (central processing unit, CPU), a system on a chip (system on a chip, SoC), an application processor (application processor, AP), a microcontroller (microcontroller), a neural-network processing unit (neural-network processing unit, NPU), and/or a graphics processing unit (graphics processing unit, GPU). The memory 132 may include, for example, a non-volatile memory and a volatile memory. The non-volatile memory is, for example, a flash memory (flash memory), including a NAND flash, a solid-state disk, or the like. The volatile memory is, for example, a synchronous dynamic random-access memory (synchronous dynamic random-access memory, SDRAM).

In an embodiment, the software system may include an operating system and program instructions 133 running in the operating system. When the processor executes the program instructions, the apparatus shown in FIG. 1c is enabled to perform steps of the data processing method provided in embodiments of this application.

In some embodiments, the memory 132 may include the program instructions 133 (for example, program logic), and the program instructions 133 may be executed by the processor 131 to perform various functions of the robot 13, including those functions described above. The memory 132 may also include additional instructions, including instructions for sending data to, receiving data from, interacting with, and/or controlling one or more of the drive apparatus 120, the sensor module 110, the control system, and the peripheral device.

In addition to the program instructions 133, the memory 132 may further store data such as a road map, route information, a position, a direction, and a speed of the autonomous driving apparatus, and other such autonomous driving apparatus data, and other information. Such information may be used by the robot 13 during an operation of the robot 13 in an autonomous, semi-autonomous, and/or manual mode.

It should be understood that the data processing method in embodiments of this application relates to algorithm processing related to artificial intelligence. Therefore, an architecture of a processor is not limited to the structure that is in FIG. 1c and in which the processor is combined with the memory, and may be another hardware architecture (for example, a hardware-only architecture or another architecture that combines software and hardware).

A wireless communication system 150 may communicate with one or more devices (for example, server) directly or through a communication network in a wireless manner. For example, the wireless communication system 150 may use 3G cellular communication such as code division multiple access (code division multiple access, CDMA), EV-DO, or global system for mobile communications (global system for mobile communications, GSM)/general packet radio service (general packet radio service, GPRS), or 4G cellular communication such as long term evolution (long term evolution, LTE), or 5G cellular communication. The wireless communication system 150 may communicate with a wireless local area network (wireless local area network, WLAN) through Wi-Fi. In some embodiments, the wireless communication system 150 may directly communicate with a device through an infrared link, Bluetooth, or ZigBee. For other wireless protocols such as various autonomous driving apparatus communication systems, the wireless communication system 150 may include, for example, one or more dedicated short-range communications (dedicated short-range communications, DSRC) devices. These devices may be used for public and/or private data communication between autonomous driving apparatuses and/or between the autonomous driving apparatus and a roadside station.

Optionally, one or more of the foregoing components may be separately installed from or associated with the robot 13. For example, the memory 132 may be partially or completely separated from the robot 13. The foregoing components may be communicatively coupled together in a wired and/or wireless manner.

Optionally, the foregoing components are merely examples. During actual application, components in the foregoing modules may be added or deleted based on an actual requirement. FIG. 1c should not be understood as any limitation on embodiments of this application.

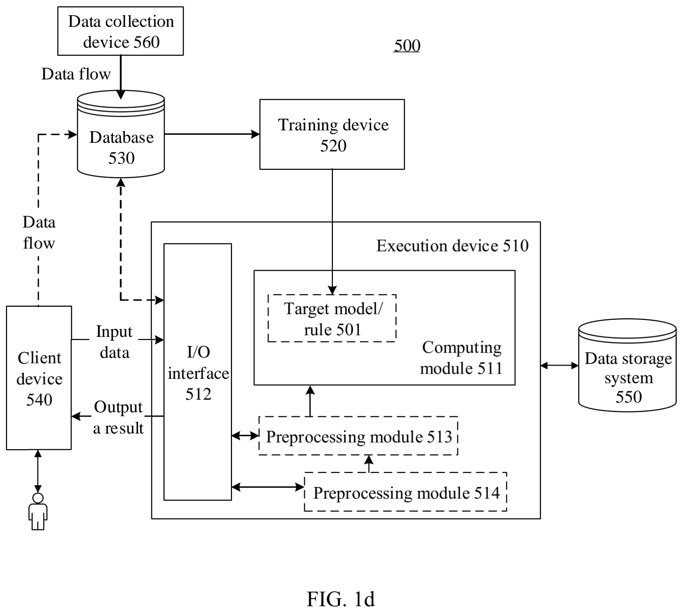

Steps related to a model inference process in embodiments of this application relate to an AI-related operation. The following describes in detail a system architecture provided in an embodiment of this application with reference to FIG. 1d.

FIG. 1d is a diagram of the system architecture according to an embodiment of this application. As shown in FIG. 1d, the system architecture 500 includes an execution device 510, a training device 520, a database 530, a client device 540, a data storage system 550, and a data collection system 560.

The execution device 510 includes a computing module 511, an I/O interface 512, a preprocessing module 513, and a preprocessing module 514. The computing module 511 may include a target model/rule 501, and the preprocessing module 513 and the preprocessing module 514 are optional.

The data collection device 560 is configured to collect a training sample. After collecting the training sample, the data collection device 560 stores the training sample in the database 530.

The training device 520 may perform a pre-training process on a to-be-trained neural network (for example, the first language model and the second language model in embodiments of this application) based on the training sample maintained in the database 530, to obtain the target model/rule 501.

It should be understood that the training device 520 may perform the pre-training process on the to-be-trained neural network based on the training sample maintained in the database 530, or perform fine-tuning on a model based on pre-training.

It should be noted that during actual application, the training sample maintained in the database 530 is not necessarily collected by the data collection device 560, and may be received from another device. In addition, it should be noted that the training device 520 does not necessarily train the target model/rule 501 completely based on the training sample maintained in the database 530, and may perform model training by obtaining a training sample from a cloud or another place. The foregoing descriptions should not be construed as a limitation on embodiments of this application.

The target model/rule 501 obtained through training by the training device 520 may be applied to different systems or devices, for example, applied to the execution device 510 shown in FIG. 1d. The execution device 510 may be a vehicle, a robot, or the like.

Specifically, the training device 520 may transfer a trained model to the execution device 510.

The execution device 510 may be a vehicle or a robot. In an implementation, the training device 530 may perform a model pre-training or fine-tuning process, and deploy a trained model in the execution device 510. The execution device 510 may execute the trained model, to implement the data processing method in embodiments of this application.

In FIG. 1d, an input/output (input/output, I/O) interface 512 is configured in the execution device 510, and is configured to exchange data with an external device. A user may input data (for example, a navigation request or a task execution request in embodiments of this application) to the I/O interface 512 through the client device 540. In addition, the input data may further include the sensor data.

The preprocessing module 513 and the preprocessing module 514 are configured to perform preprocessing based on the input data received by the I/O interface 512. It should be understood that there may be no preprocessing module 513 and preprocessing module 514, or there may be only one preprocessing module. When the preprocessing module 513 and the preprocessing module 514 do not exist, the computing module 511 may be directly used to process the input data.

When the execution device 510 preprocesses the input data, or when the computing module 511 of the execution device 510 performs related processing such as calculation, the execution device 510 may invoke data, code, and the like in the data storage system 550 for corresponding processing, or may store, into the data storage system 550, data, instructions, and the like obtained through corresponding processing.

Finally, the I/O interface 512 provides a processing result for the client device 540, to provide the processing result for the user.

In a case shown in FIG. 1d, the user may manually give input data, and "manually giving the input data" may be operated on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may be specifically presented in a specific manner of displaying, a sound, an action, or the like. The client device 540 may alternatively be used as a data collection end, collect the input data input to the I/O interface 512 and that is shown in the figure and the output result output from the I/O interface 512, use the input data and the output result as new sample data, and store the new sample data in the database 530. Certainly, the client device 540 may alternatively not perform collection. Instead, the I/O interface 512 directly stores, in the database 530 as new sample data, the input data input to the I/O interface 512 and the output result output from the I/O interface 512 that are shown in the figure.

It should be noted that FIG. 1d is merely a diagram of the system architecture according to an embodiment of this application. A position relationship between a device, a component, a module, and the like shown in the figure does not constitute any limitation. For example, in FIG. 1d, the data storage system 550 is an external memory relative to the execution device 510. In another case, the data storage system 550 may alternatively be disposed in the execution device 510. It should be understood that the execution device 510 may be deployed in the client device 540.

Details from a perspective of model inference are as follows.

In embodiments of this application, the computing module 511 of the execution device 510 may obtain the code stored in the data storage system 550, to implement steps related to the model inference process in embodiments of this application.

In embodiments of this application, the computing module 511 of the execution device 510 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the training device 520 may be a hardware system having an instruction execution function, for example, a CPU or a DSP, or may be a hardware system having no instruction execution function, for example, an ASIC or an FPGA, or may be a combination of the hardware system having no instruction execution function and the hardware system having an instruction execution function.

Specifically, the computing module 511 in the execution device 510 may be the hardware system having an instruction execution function. The steps related to the model inference process provided in embodiments of this application may be software code stored in a memory. The computing module 511 in the execution device 510 may obtain the software code from the memory, and execute the obtained software code to implement the steps related to the model inference process provided in embodiments of this application.

It should be understood that the computing module 511 of the execution device 510 may be the combination of the hardware system having no instruction execution function and the hardware system having the instruction execution function. Some of the steps related to the model inference process provided in embodiments of this application may alternatively be implemented by the hardware system having no instruction execution function in the computing module 511 of the execution device 510. This is not limited herein.

Details from a perspective of model training are as follows.

In embodiments of this application, the training device 520 may obtain code stored in a memory (which is not shown in FIG. 1d, and may be integrated into the training device 520 or separately deployed from the training device 520), to implement steps related to model training in embodiments of this application.

In embodiments of this application, the training device 520 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the training device 520 may be a hardware system having an instruction execution function, for example, a CPU or a DSP, or may be a hardware system having no instruction execution function, for example, an ASIC or an FPGA, or may be a combination of the hardware system having no instruction execution function and the hardware system having an instruction execution function.

It should be understood that the training device 520 may be the combination of the hardware system having no instruction execution function and the hardware system having the instruction execution function. Some of the steps related to model training provided in embodiments of this application may be implemented by the hardware system having no instruction execution function in the training device 520. This is not limited herein.

The foregoing describes the application architecture for embodiments of this application with reference to the accompanying drawings. The following describes in detail the intention prediction method provided in embodiments of this application.

Embodiments of this application relate to a neural network. Therefore, for ease of understanding, the following first describes related terms in embodiments of this application.

(1) Neural network

The neural network may include a neuron. The neuron may be an operation unit that uses $x_s$ (namely, input data) and an intercept of 1 as an input. An output of the operation unit may be as follows:

$$h_{W,b}\left(x\right) = f\left(W^T x\right) = f(\sum\nolimits_{s=1}^{n} W_s x_s + b)$$

$s=1$, 2, ..., or n. n is a natural number greater than 1, $W_s$ is a weight of $x_s$, b is a bias of the neuron, and f is an activation function (activation functions) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network formed by connecting a plurality of single neurons together. To be specific, an output of one neuron may be an input to another neuron. An input of each neuron may be connected to a local receptive field of a previous layer to extract a feature of the local receptive field. The local receptive field may be a region including several neurons.

(2) A convolutional neural network (convolutional neuron network, CNN) is a deep neural network with a convolutional structure. The convolutional neural network includes a feature extractor that includes a convolutional layer and a sampling sublayer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. A convolutional layer usually includes several feature planes, and each feature plane may include some neurons arranged in a rectangle. Neurons in a same feature plane share a weight, and the weight shared herein is a convolution kernel. Weight sharing may be understood as that a feature extraction manner is irrelevant to a position. The convolution kernel may be in a form of a matrix of a random size. In a training process of the convolutional neural network, a proper weight may be obtained for the convolution kernel through learning. In addition, benefits directly brought by the weight sharing are that connections between layers of the convolutional neural network are reduced, while an overfitting risk is reduced.

(3) Deep neural network

The deep neural network (Deep Neural Network, DNN), also referred to as a multilayer neural network, may be understood as a neural network having many hidden layers. The "many" herein does not have a special measurement standard. The DNN is divided based on positions of different layers, and a neural network in the DNN may be divided into three types: an input layer, a hidden layer, and an output layer. Usually, a first layer is the input layer, a last layer is the output layer, and an intermediate layer is the hidden layer. Layers are fully connected. To be specific, any neuron at an $i^{th}$ layer is necessarily connected to any neuron at an $(i+1)^{th}$ layer. Although the DNN seems to be complex, the DNN is actually not complex in terms of work at each layer, and is simply expressed as the following linear relationship expression: $\vec{y} = \alpha(W\vec{x} + \vec{b})$. $\vec{x}$ is an input vector, $\vec{y}$ is an output vector, $\vec{b}$ is an offset vector, W is a weight matrix (also referred to as a coefficient), and $\alpha$() is an activation function. At each layer, the output vector $\vec{x}$ is obtained by performing such a simple operation on the input vector $\vec{y}$. Because the DNN has a large quantity of layers, a quantity of coefficients W and a quantity of offset vectors b are also large. Definitions of these parameters in the DNN are as follows: The coefficient W is used as an example. It is assumed that in a DNN having three layers, a linear coefficient from a $4^{th}$ neuron at the $2^{nd}$ layer to a $2^{nd}$ neuron at the $3^{rd}$ layer is defined as $W_{24}^{3}$. The superscript 3 represents a layer at which the coefficient W is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that the input layer does not have the parameter W. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(4) Loss function

In a process of training a deep neural network, because it is expected that an output of the deep neural network is as close as possible to a value that actually needs to be predicted, a current predicted value of the network and an actually expected target value may be compared, and then a weight vector of each layer of the neural network is updated based on a difference between the current predicted value and the target value (certainly, before a first update, there is usually an initialization process, that is, preconfiguring a parameter for each layer of the deep neural network). For example, if the predicted value of the network is large, the weight vector is adjusted to decrease the predicted value, and adjustment is continuously performed, until the deep neural network can predict the actually expected target value. Therefore, "how to obtain, through comparison, a difference between the predicted value and the target value" needs to be predefined. This is the loss function (loss function) or an objective function (objective function). The loss function and the objective function are important equations that measure the difference between the predicted value and the target value. The loss function is used as an example. A larger output value (loss) of the loss function indicates a larger difference. Therefore, training of the deep neural network is a process of minimizing the loss as much as possible.

(5) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to converge the error loss. The back propagation algorithm is an error-loss-centered back propagation motion intended to obtain a parameter, such as a weight matrix, of an optimal super-resolution model.

(6) Natural language processing (natural language processing, NLP)

Natural language (natural language) is human language, and natural language processing (NLP) is processing of the human language. Natural language processing is a process of systematic analysis, understanding, and information extraction of text data in an intelligent and efficient manner. By using NLP and components of NLP, massive chunks of text data can be organized, or numerous automated tasks can be performed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be solved.

(7) Pre-trained language model (pre-trained language model)

The pre-trained language model is a natural language sequence encoder, and encodes each word in a natural language sequence into a vector representation to perform a prediction task. Training for the pre-trained language model includes two stages. At a pre-training (pre-training) stage, the model is trained for a language model task on a large scale of unsupervised text to learn a word representation. At a fine-tuning (fine-tuning) stage, the model is initialized by using parameters learned at the pre-training stage, and is trained in few steps on downstream tasks (downstream tasks) such as text classification (text classification) and sequence labeling (sequence labeling), so that semantic information obtained through pre-training can be successfully migrated to the downstream tasks.

For a robot or a vehicle, when automatic control is performed (for example, automatic task execution performed by the robot based on a task execution request of a user, or an autonomous driving task performed by the vehicle), three tasks are usually included: a perception task, a prediction task, and a decision-making task. Autonomous driving is used as an example. The perception task includes receiving original data (an image or a laser) from a sensor as an input, and recognizing a dynamic target (for example, a size and a position of a pedestrian, and a size and a position of a vehicle) and a static element (for example, a lane line and an arrow sign on the ground) in an environment. The prediction task may be receiving original results of the dynamic and static targets obtained by the perception task, and performing prediction and inference on a movement intention of the target in the environment, and mainly predicts a future movement trajectory and a future movement intention of another vehicle. The decision-making task may be receiving a prediction result obtained by the prediction task, generating a decision-making conclusion based on the future traveling intention of the another vehicle and a navigation task of an ego vehicle, outputting a control signal, and controlling the vehicle to perform autonomous driving.

However, in an existing architecture design, functions of task modules are decoupled from each other. The task modules have a clear upstream-downstream dependency relationship, and are connected in series by predefining output interfaces of the modules. This method has advantages of strong interpretability and easy development and maintenance by module. However, due to decoupling between an upstream module and a downstream module, if an error occurs in the upstream module, a decision-making result of a downstream module is also incorrect, leading to poor control precision.

To resolve the foregoing problem, embodiments of this application provide a language model-based end-to-end control solution. "End-to-end" means that a system can directly output a control signal based on input sensor data. Information transmission between modules of the system is no longer agreed content in a fixed format, but is comprehensive information sharing and dissemination.

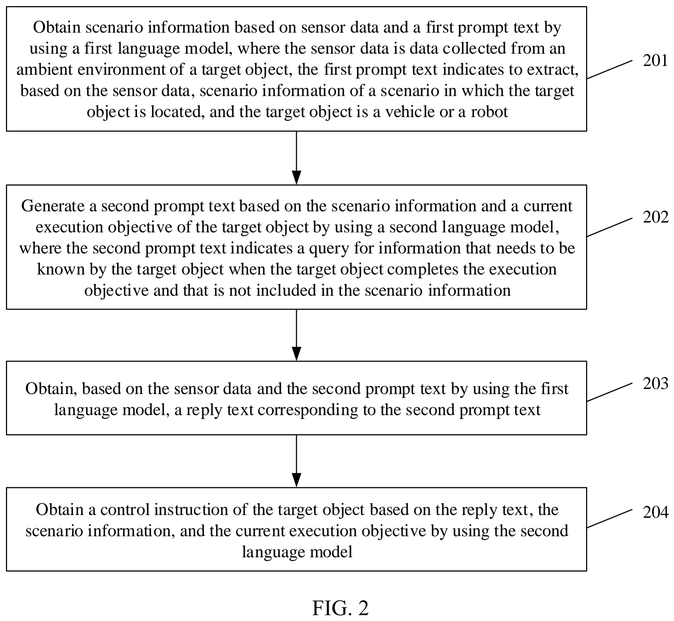

FIG. 2 is a flowchart of a data processing method according to an embodiment of this application. As shown in FIG. 2, the data processing method provided in this embodiment of this application includes the following steps.

201: Obtain scenario information based on sensor data and a first prompt text by using a first language model, where the sensor data is data collected from an ambient environment of a target object, the first prompt text indicates to extract, based on the sensor data, scenario information of a scenario in which the target object is located, and the target object is a vehicle or a robot.

In a possible implementation, the embodiment corresponding to FIG. 2 may be performed by the target object, or a server, or some steps are performed by the target object, and some steps are performed by a server. This is not limited herein.

In a possible implementation, the target object is the robot. The target object may receive a task instruction entered by a user. For example, the task instruction may indicate a task that is to be executed by the robot, for example, "help me get some drinks in the kitchen" or "help me get a water bottle on the desk".

In a possible implementation, the target object is the vehicle. The target object may receive a navigation instruction of a user. For example, the navigation instruction may indicate a destination of autonomous driving of the vehicle, for example, "navigate to the school".

After the task instruction (for example, the navigation instruction and the task instruction for the robot that are described above) is received, objectives that need to be executed for implementing phases of the task indicated by the task instruction may be obtained. The target object needs to sequentially implement the objectives for the phases, which may implement the task corresponding to the task instruction. In a process in which the target object executes the task corresponding to the task instruction, an objective that needs to be currently implemented needs to be determined, and a control policy that can implement the objective that needs to be currently executed is further determined.

Specifically, when executing the task, the target object may determine, according to an instruction (for example, the task instruction or the navigation instruction that is described above) entered by the user and a status of the target object, a task that needs to be currently executed (that is, a current execution objective of the target object in this embodiment of this application). The target object continuously executes, over time, execution objectives that need to be executed at each time point until the task indicated by the instruction entered by the user is implemented.

For example, the robot may obtain the current execution objective of the target object based on a current posture of the robot and scenario map information and according to the task instruction.

Optionally, the robot may obtain, based on the current posture of the robot and the scenario map information and according to the task instruction by using a second language model, the objectives (including the current execution objective) that need to be executed for implementing the phases of the task indicated by the task instruction.

In a possible implementation, the vehicle may obtain the current execution objective of the target object based on a current position of the vehicle and according to the navigation instruction.

Optionally, the vehicle may obtain, based on the current position of the vehicle and according to the navigation instruction (which may further include map information) by using a second language model, the objectives (including the current execution objective) that need to be executed for implementing the phases of the task indicated by the task instruction.

For example, the vehicle may generate, based on the current position of the vehicle according to the navigation instruction, the objectives (for example, a coarse-grained planned driving path) that need to be executed for the phases. For example, the following may be included: first leaving an underground garage, safely traveling to a residential compound based on a navigation route after arriving at the ground, passing a barrier gate after arriving at an entrance of the residential compound, and after recognizing an idle parking space, parking in the parking space.

In a possible implementation, the target object may determine, based on a current status, an objective that needs to be currently executed. To execute the objective that needs to be currently executed, information about a current scenario needs to be obtained, and control information is determined based on the scenario information (and information such as a recovery text that is subsequently described). In this way, the target object can implement, in the current scenario, the objective that needs to be currently executed.

The following describes how to obtain the scenario information.

In a possible implementation, the target object is the vehicle. The sensor data is data collected from an ambient environment of the target object. For example, the sensor data may be data collected by an image sensor or data collected by a radar.

In a possible implementation, the target object is the robot. The sensor data is data collected from an ambient environment of the target object. For example, the sensor data may be data collected by an image sensor or data collected by a radar.

In a possible implementation, the first language model (which may also be referred to as a language-perception model in embodiments of this application) may be a large language model such as ChatGPT, GPT-4, or ChatGLM. A type of the language model is not limited in embodiments of this application.

In a possible implementation, the first language model may receive an input of high-frequency sensor data and an input of the first prompt text. The first prompt (prompt) text may indicate to extract, based on the sensor data, the scenario information of the scenario in which the target object is located. For example, an example of the target object being the vehicle is used, and the first prompt text may be a request to sense a type of an ambient environment of the vehicle and a sensing element in the environment. The first prompt text may guide the first language model to output a sensing result (that is, the environment information in this embodiment of this application). For example, the environment information may include a category of a current scenario (for example, an underground garage, open ground, a tunnel, or an intersection) and a sensing element in the current scenario, such as a position of a vehicle or a pedestrian and a lane line detection result.

The sensing element may be an object that affects execution of a task by the target object.

202: Generate a second prompt text based on the scenario information and the current execution objective of the target object by using the second language model, where the second prompt text indicates a query for information that needs to be known by the target object when the target object completes the execution objective and that is not included in the scenario information.

The scenario information and the current execution objective of the target object may be input to the second language model in a text (for example, prompt) manner.

In a possible implementation, after the scenario information is obtained, the second prompt text may be generated based on the scenario information and the current execution objective of the target object by using the second language model. The second prompt text indicates the query for the information that needs to be known by the target object when the target object completes the execution objective and that is not included in the scenario information.

In a possible implementation, if the scenario information obtained by using the first language model already includes all information required for the current execution objective of the target object, the second language model may directly obtain a control instruction for implementing the current execution objective.

However, due to a complex scenario or an unexpected situation, it is usually difficult for the scenario information obtained by using the first language model to include all information required for the current execution objective of the target object. In this case, the second language model may output an active query text (that is, the second prompt text in this embodiment of this application). The second prompt text indicates the query for the information that needs to be known by the target object when the target object completes the execution objective and that is not included in the scenario information.

In a possible implementation, the information that needs to be known and that is not included in the scenario information includes: status information of a sensing element that is associated with the execution objective. The sensing element herein is an object associated with the execution objective. For example, if the scenario category in the current scenario information is an intersection, and the current execution objective is to go straight through the intersection, the sensing element may be a status of a traffic light, how long it takes for a red traffic light to turn green, or the like.

For example, the current execution objective is to go straight through an intersection, the sensing element may be a traffic light, and the second prompt text may be: Recognize a status of the traffic light, and determine whether I can go straight.

For example, the current execution objective is to enter a gate of a residential compound, the sensing element may be a parking barrier gate rod, and the second prompt text may be: Is the parking barrier gate rod lifted, and can the vehicle pass?

For example, the current execution objective is parking, the sensing element may be an idle state of a parking space, and the second prompt text may be: Is there an idle parking space?

In a possible implementation, the information that needs to be known and that is not included in the scenario information includes: an implementation of the execution objective.

For example, the current execution objective is to leave an underground garage. In an underground garage scenario, no GPS positioning information or map information is available. Therefore, the second prompt text may be "How do I drive to leave the underground garage?"

203: Obtain, based on the sensor data and the second prompt text by using the first language model, a reply text corresponding to the second prompt text.

In a possible implementation, the first language model may perform secondary inference based on the sensor data and the second prompt text, and output high-order environment information (that is, the reply text corresponding to the second prompt text) that meets a requirement of the question indicated in the second prompt text, to support decision-making of the second language model.

The following uses an example of the target object being the vehicle to describe how the first language model and the second language model collaborate to generate a decision-making instruction in different traveling scenarios.

(1) Underground garage scenario: No GPS positioning information or map information is available in an underground garage. Therefore, the second language model may generate the second prompt text: "How do I drive to leave the underground garage?" In addition, the second language model inputs the second prompt text to the first language model. The first language model recognizes an exit guide sign of the underground garage in the environment based on the sensor data, and provides the reply text: The exit guide sign is detected. Turn right to leave the underground garage. After receiving the reply text, the second language model may generate a driving instruction (which may also be referred to as a control instruction in embodiments of this application): Turn right to leave the underground garage.

(2) Crossroad scenario: The second language model may generate, based on the scenario information and the current execution objective, the second prompt text: Recognize a status of a traffic light, and determine whether I can go straight. The second language model inputs the second prompt text to the first language model. After performing recognition based on the sensor data, the first language model provides the reply text: A current traffic light is red, and you can pass the traffic light 5 seconds later. After receiving the reply text, the second language model generates a driving instruction: The traffic light at the current intersection is red. Stop the vehicle and wait for 5 seconds.

(3) Scenario of passing a barrier gate: After the vehicle arrives at an entrance of a residential compound, the second language model generates the second prompt text: Is a parking barrier gate rod lifted, and can the vehicle pass? In addition, the second language model inputs the second prompt text to the first language model. After recognizing a status of the front barrier gate rod based on the sensor data, the first language model outputs the reply text: The barrier gate rod has been lifted, and you can pass. Then, the second language model generates, based on the reply text, a driving instruction: Go straight to pass the barrier gate.

(4) Parking scenario: After the vehicle arrives at a parking lot of a residential compound, the second language model generates the second prompt text: Is there any idle parking space? In addition, the second language model inputs the second prompt text to the first language model. The first language model recognizes a parking space in the environment based on the sensor data, and provides the reply text: Two idle parking spaces are found in a right front direction, and you can park the vehicle. After receiving the reply text, the second language model may generate a driving decision-making instruction: Park in the idle parking space in the right front direction.

204: Obtain a control instruction of the target object based on the reply text, the scenario information, and the current execution objective by using the second language model.

In a possible implementation, after obtaining the reply text, the first language model may input the reply text to the second language model. The second language model may obtain the control instruction of the target object based on the reply text, the scenario information, and the current execution objective by using the second language model.

The control instruction may be a coarse-grained control objective (for example, stopping the vehicle and waiting for 5 seconds, and then going straight, turning left, or turning right), or may be a fine-grained hardware control signal, for example, a control signal for rotation of a steering wheel or a control signal for rotation of a robotic arm joint.

In this embodiment of this application, the second language model obtains requirement information (the second prompt text) in a form of a query text based on different scenario information, the first language model obtains the reply text based on the query text, and the reply text is transferred to the second language model for decision-making. On one hand, an end-to-end automatic control system is constructed through interaction between the first language model and the second language model. Compared with a multi-phase decision-making system, this application can improve decision-making precision. on the other hand, a language model is introduced into the architecture, so that an induction and inference capability of the big language model can be extended to a control field. An expression manner of a text of the language model is different from a conventional fixed format, and can represent infinite types of sensing requirements. This unifies manners of obtaining conclusions of various types of sensing requirements of the second language model.

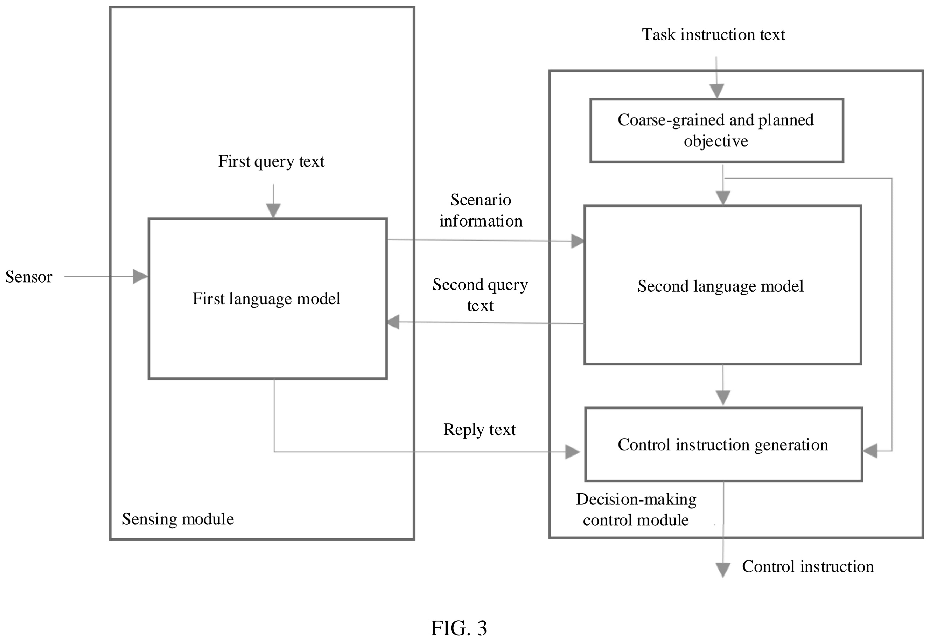

As shown in FIG. 3, FIG. 3 is a schematic flowchart in a typical autonomous driving scenario. The sensor data and a first query text may be input to a first language model in a sensing module. The first language model may obtain scenario information and input the scenario information to a second language model of a decision-making control model. The second language model may obtain a second query text based on a coarse-grained and planned objective and the scenario information, and input the second query text to the first language model. The first language model may obtain a reply text corresponding to the second query text, and the second language model (or a control instruction generation module separated from the second language model) may obtain a control instruction based on information such as the reply text and the scenario information (it should be understood that the control instruction generation model in FIG. 3 may belong to the second language model or may not belong to the second language model).

The following describes two implementation schematics in embodiments of this application by using autonomous driving and robot control as examples.

In an autonomous driving scenario, a navigation instruction of a user may be: Navigate home from a company's underground garage. A navigation instruction text: "Navigate home from the company's underground garage." is entered for the second language model. The second language model generates, based on positioning information and navigation instruction information, a coarse-grained planned driving path: first leaving the underground garage, safely traveling to a residential compound based on a navigation route after arriving at the ground, passing a barrier gate after arriving at an entrance of the residential compound, and after recognizing an idle parking space, parking in the parking space. The first language model receives a high-frequency basic sensing text (that is, the first prompt text) as an input of an "ambient environment of the vehicle", and outputs a current traveling scenario (for example, an underground garage, open ground, a tunnel, or an intersection) that is sensed and recognized, and a sensing element corresponding to the current scenario, such as a position of a vehicle or a pedestrian and a lane line detection result. The second language model determines, based on the received current traveling scenario and the corresponding sensing element, whether there is a to-be-recognized sensing element in the current scenario. If yes, an active query text (that is, the second prompt text) for the sensing element is generated, and the active query text for the sensing element is sent to the first language model. For example, the current traveling scenario received by the second language model is "intersection", a coarse-grained and planned path is "going straight", and the active query text that is for the sensing element and that is generated by the second language model is: "Recognize a status of a traffic light, and determine whether I can go straight." The first language model receives the active query text (that is, the second prompt text) for the sensing element, recognizes an environment sensing element, performs secondary inference based on a currently recognized environment sensing result, and outputs high-order environment information (that is, the reply text): "A current traffic light is red, and you can pass the traffic light 5 seconds later." that meets a requirement of the question. After receiving a sensing and inference result, the second language model outputs, based on the coarse-grained and planned path and another previously recognized sensing element, a driving decision-making instruction: "The traffic light at the current intersection is red. Stop the vehicle and wait for 5 seconds."

In the robot control scenario, the task instruction of the user may be: "Help me get some drinks in the kitchen". A task instruction text: "Help me get some drinks in the kitchen." is entered for the second language model. The second language model generates a coarse-grained planned navigation path based on the input text, a current scenario map, and a physical quantity of the robot. The first language model receives a high-frequency basic sensing text (that is, the first prompt text) as an input of an "ambient environment of the robot", receives an environment feature map and basic sensing data of a sensor, and outputs a current traveling scenario that is sensed and recognized, and a sensing element corresponding to the current scenario. The second language model determines, based on the received current traveling scenario and the corresponding sensing element, whether there is a to-be-recognized sensing element in the current scenario. If yes, an active query text for the sensing element is generated, and the active query text for the sensing element is sent to the first language model. The first language model receives the active query text for the sensing element, recognizes an environment sensing element (that is, the second prompt text), and sends the environment sensing element to the first language model. The first language model receives the active query text (that is, the second prompt text) for the sensing element, recognizes an environment sensing element, performs secondary inference based on a currently recognized environment sensing result, and outputs high-order environment information (that is, the reply text) that meets a requirement of the question. After receiving a sensing and inference result, the second language model outputs a driving decision-making instruction based on the coarse-grained and planned path and another previously recognized sensing element until a task of navigating to the kitchen is completed.

The foregoing describes the data processing method provided in embodiments of this application from a perspective of a method. The following describes a data processing apparatus provided in embodiments of this application from a perspective of an apparatus.

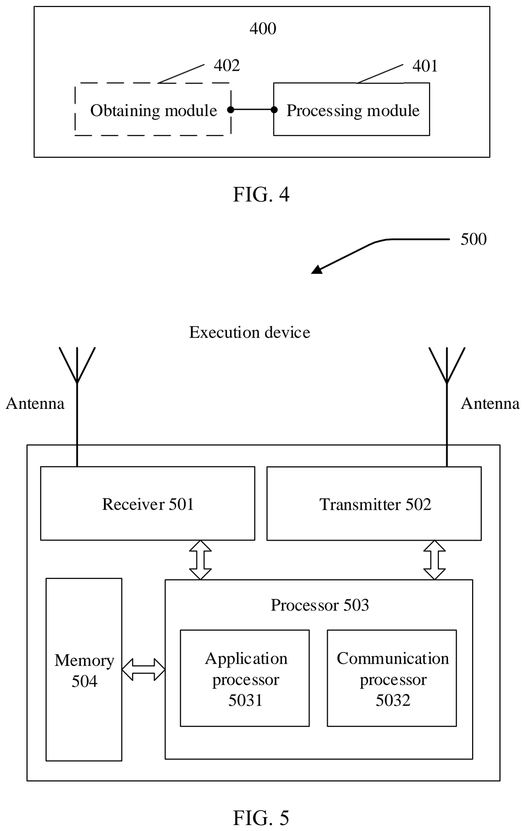

FIG. 4 is a diagram of a structure of a data processing apparatus according to an embodiment of this application. As shown in FIG. 4, the apparatus 400 includes:

a processing module 401, configured to: obtain scenario information based on sensor data and a first prompt text by using a first language model, where the sensor data is data collected from an ambient environment of a target object, the first prompt text indicates to extract, based on the sensor data, scenario information of a scenario in which the target object is located, and the target object is a vehicle or a robot; generate a second prompt text based on the scenario information and a current execution objective of the target object by using a second language model, where the second prompt text indicates a query for information that needs to be known by the target object when the target object completes the execution objective and that is not included in the scenario information; obtain, based on the sensor data and the second prompt text by using the first language model, a reply text corresponding to the second prompt text; and obtain a control instruction of the target object based on the reply text, the scenario information, and the current execution objective by using the second language model.

For specific descriptions of the processing module 401, refer to the descriptions of steps 201 to 204 in the foregoing embodiment. Details are not described herein again.

In a possible implementation, the scenario information includes information that indicates a scenario category and/or information about a sensing element included in the scenario.

In a possible implementation, the target object is the vehicle, and the apparatus further includes:

an obtaining module 402, configured to: receive a navigation instruction of a user; and
obtain the current execution objective of the target object based on a current position of the vehicle and according to the navigation instruction.

In a possible implementation, the target object is the robot, and the apparatus further includes:
an obtaining module 402, configured to: receive a task instruction of a user.

The processing module 401 is further configured to obtain the current execution objective of the target object based on a current posture of the robot and scenario map information and according to the task instruction.

In a possible implementation, the information that needs to be known and that is not included in the scenario information includes:

status information of a sensing element that is associated with the execution objective; or
an implementation of the execution objective.

In a possible implementation, the first language model and the second language model are ChatGPT, GPT-4, or ChatGLM.

It should be noted that content such as information exchange between the modules/units of the apparatuses and an execution process is based on the same concept as the method embodiments of this application, and produces the same technical effect as that of the method embodiments of this application. For specific content, refer to the foregoing descriptions in the method embodiments of this application. Details are not described herein again.

The following describes an execution device provided in embodiments of this application. FIG. 5 is a diagram of a structure of the execution device according to an embodiment of this application. The execution device 500 may be specifically represented as a control device, a robot, or the like of a vehicle. This is not limited herein. Specifically, the execution device 500 includes a receiver 501, a transmitter 502, a processor 503, and a memory 504 (there may be one or more processors 503 in the execution device 500, and one processor is used as an example in FIG. 5). The processor 503 may include an application processor 5031 and a communication processor 5032. In some embodiments of this application, the receiver 501, the transmitter 502, the processor 503, and the memory 504 may be connected through a bus or in another manner.

The memory 504 may include a read-only memory and a random access memory, and provide instructions and data for the processor 503. A part of the memory 504 may further include a non-volatile random access memory (non-volatile random access memory, NVRAM). The memory 504 stores a processor and operation instructions, an executable module or a data structure, a subset thereof, or an extended set thereof. The operation instructions may include various operation instructions for implementing various operations.

The processor 503 controls an operation of the execution device. During specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiments of this application may be applied to the processor 503, or may be implemented by the processor 503. The processor 503 may be an integrated circuit chip and has a signal processing capability. In an implementation process, steps in the foregoing method may be completed by using a hardware integrated logic circuit in the processor 503 or by using instructions in a form of software. The processor 503 may be a general-purpose processor, a digital signal processor (digital signal processor, DSP), a microprocessor, or a microcontroller. The processor 503 may further include an application-specific integrated circuit (application-specific integrated circuit, ASIC), a field-programmable gate array (field programmable gate array, FPGA) or another programmable logic device, a discrete gate or transistor logic device, or a discrete hardware component. The processor 503 may implement or perform the methods, steps, and logic block diagrams disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 504, and the processor 503 reads information in the memory 504, and completes the steps in the foregoing method in combination with hardware of the processor 503.

The receiver 501 may be configured to: receive input digit or character information, and generate a signal input related to a related setting and function control of the execution device. The transmitter 502 may be configured to output the digital or character information through a first interface. The transmitter 502 may be further configured to send instructions to a disk group through the first interface, to modify data in the disk group.

In this embodiment of this application, in a case, the processor 503 is configured to perform the data processing method described in the embodiment corresponding to FIG. 2.

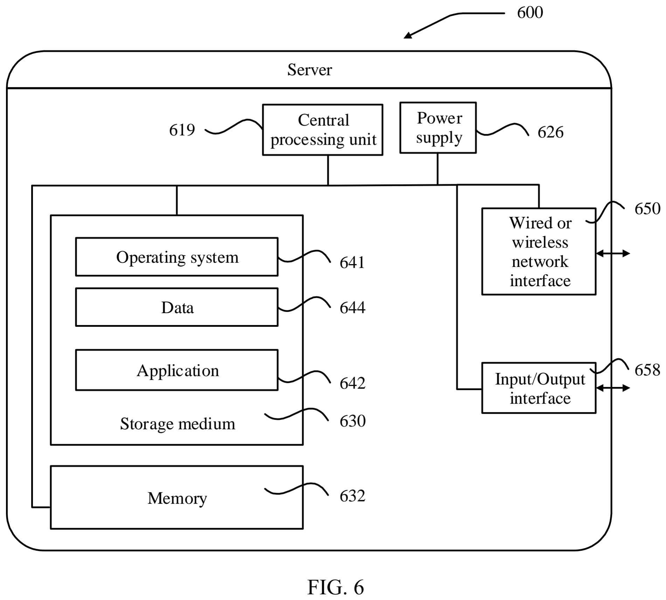

An embodiment of this application further provides a server. FIG. 6 is a diagram of a structure of the server according to an embodiment of this application. The data processing apparatus described in the embodiment corresponding to FIG. 4 may be deployed on the server 600, to implement a function of the data processing apparatus in the embodiment corresponding to FIG. 4. Specifically, the server 600 is implemented by one or more servers. The server 600 may differ greatly due to different configurations or performance, and may include one or more central processing units (central processing units, CPUs) 619 (for example, one or more processors), a memory 632, and one or more storage media 630 (for example, one or more mass storage devices) that store an application program 642 or data 644. The memory 632 and the storage medium 630 may perform transitory storage or persistent storage. A program stored in the storage medium 630 may include one or more modules (not shown in the figure), and each module may include a series of instruction operations for the server. Further, the central processing unit 619 may be configured to: communicate with the storage medium 630, and perform, on the server 600, the series of instruction operations in the storage medium 630.

The server 600 may further include one or more power supplies 626, one or more wired or wireless network interfaces 650, one or more input/output interfaces 658, or one or more operating systems 641, for example, Windows Server™, Mac OS X™, Unix™, Linux™, and FreeBSD™.

In this embodiment of this application, the central processing unit 619 is configured to perform the data processing method provided in the embodiment corresponding to FIG. 2.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used for signal processing. When the program is run on a computer, the computer is enabled to perform steps performed by the foregoing execution device, or the computer is enabled to perform steps performed by the foregoing training device.

The execution device, the training device, or the terminal device provided in this embodiment of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiment, or a chip in the training device performs the data processing method described in the foregoing embodiment. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

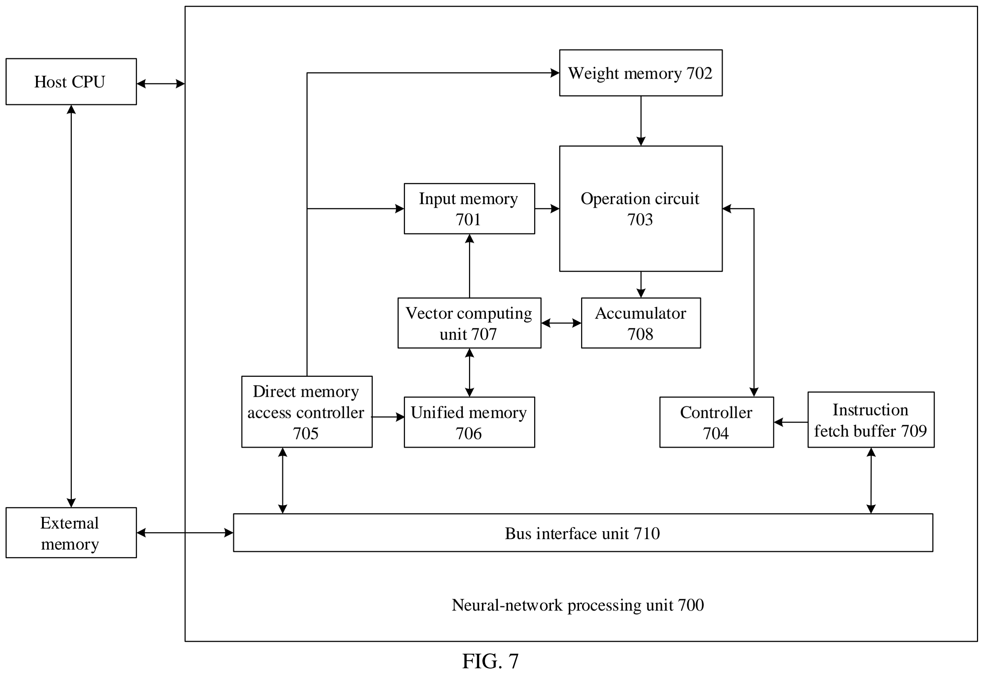

Specifically, FIG. 7 is a diagram of a structure of a chip according to an embodiment of this application. The chip may be represented as a neural-network processing unit NPU 700. The NPU 700 is mounted to a host CPU (Host CPU) as a coprocessor, and the host CPU allocates a task. A core part of the NPU is an operation circuit 703, and a controller 704 controls the operation circuit 703 to extract matrix data in a memory and perform a multiplication operation.

In some implementations, the operation circuit 703 includes a plurality of process engines (Process Engines, PEs) inside. In some implementations, the operation circuit 703 is a two-dimensional systolic array. The operation circuit 703 may alternatively be a one-dimensional systolic array or another electronic circuit that can perform mathematical operations such as multiplication and addition. In some implementations, the operation circuit 703 is a general-purpose matrix processor.

For example, it is assumed that there are an input matrix A, a weight matrix B, and an output matrix C. The operation circuit fetches, from a weight memory 702, data corresponding to the matrix B, and caches the data on each PE in the operation circuit. The operation circuit fetches data of the matrix A from an input memory 701, to perform a matrix operation on the matrix B, and stores an obtained partial result or an obtained final result of the matrix in an accumulator (accumulator) 708.

A unified memory 706 is configured to store input data and output data. Weight data is directly transferred to the weight memory 702 through a direct memory access controller (Direct Memory Access Controller, DMAC) DMAC 705. The input data is also transferred to the unified memory 706 through the DMAC.

A BIU is a bus interface unit, namely, a bus interface unit 710, and is configured to perform interaction between an AXI bus and the DMAC and between the AXI bus and an instruction fetch buffer (Instruction Fetch Buffer, IFB) 709.

The bus interface unit (Bus Interface Unit, BIU for short) 710 is used by the instruction fetch buffer 709 to obtain an instruction from an external memory, and is further used by the direct memory access controller 705 to obtain original data of the input matrix A or the weight matrix B from the external memory.

The DMAC is mainly configured to transfer input data in the external memory DDR to the unified memory 706, transfer weight data to the weight memory 702, or transfer input data to the input memory 701.

A vector computing unit 707 includes a plurality of operation processing units; and if necessary, performs further processing such as vector multiplication, vector addition, an exponential operation, a logarithmic operation, or value comparison on an output of the operation circuit. The vector computing unit 707 is mainly configured to perform network calculation, such as batch normalization (batch normalization), pixel-level summation, and upsampling on a feature plane, at a non-convolutional/fully connected layer in a neural network.

In some implementations, the vector computing unit 707 can store a processed output vector in the unified memory 706. For example, the vector computing unit 707 may apply a linear function or a non-linear function to the output of the operation circuit 703, for example, perform linear interpolation on a feature plane extracted at a convolutional layer. For another example, the vector computing unit 707 may apply a linear function or a non-linear function to a vector of an accumulated value, to generate an activation value. In some implementations, the vector computing unit 707 generates a normalized value, a value obtained by performing pixel-level summation, or a combination thereof. In some implementations, the processed output vector can be used as an activation input to the operation circuit 703. For example, the processed output vector can be used at a subsequent layer in the neural network.

The instruction fetch buffer (instruction fetch buffer) 709 connected to the controller 704 is configured to store instructions used by the controller 704.

The unified memory 706, the input memory 701, the weight memory 702, and the instruction fetch buffer 709 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the apparatus embodiments described above are merely examples. The units described as separate parts may or may not be physically separate, and parts displayed as units may or may not be physical units, that is, may be located at one position, or may be distributed on a plurality of network units. Some or all of the modules may be selected based on actual requirements to achieve the objectives of the solutions in embodiments. In addition, in the accompanying drawings of the apparatus embodiments provided in this application, connection relationships between modules indicate that there are communication connections between the modules, and may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated application-specific integrated circuit, a dedicated CPU, a dedicated memory, a dedicated component, and the like. Usually, any functions that are performed by a computer program can be easily implemented by using corresponding hardware. Moreover, there may be various specific hardware structures, such as analog circuits, digital circuits, or dedicated circuits, used to achieve a same function. However, as for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the method in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

**Claims**

1. A data processing method, wherein the method comprises:

   obtaining scenario information based on sensor data and a first prompt text by using a first language model, wherein the sensor data is data collected from an ambient environment of a target object, the first prompt text indicates to extract, based on the sensor data, scenario information of a scenario in which the target object is located, and the target object is a vehicle or a robot;
   generating a second prompt text based on the scenario information and a current execution objective of the target object by using a second language model, wherein the second prompt text indicates a query for information that needs to be known by the target object when the target object completes the execution objective and that is not comprised in the scenario information;
   obtaining, based on the sensor data and the second prompt text by using the first language model, a reply text corresponding to the second prompt text; and
   obtaining a control instruction of the target object based on the reply text, the scenario information, and the current execution objective by using the second language model.

2. The method according to claim 1, wherein the scenario information comprises information that indicates a scenario category and/or information about a sensing element comprised in the scenario.

3. The method according to claim 1 or 2, wherein the target object is the vehicle, and the method further comprises:

   receiving a navigation instruction of a user; and
   obtaining the current execution objective of the target object based on a current position of the vehicle and according to the navigation instruction.

4. The method according to claim 1 or 2, wherein the target object is the robot, and the method further comprises:

   receiving a task instruction of a user; and
   obtaining the current execution objective of the target object based on a current posture of the robot and scenario map information and according to the task instruction.

5. The method according to any one of claims 1 to 4, wherein the information that needs to be known and that is not comprised in the scenario information comprises:

   status information of a sensing element that is associated with the execution objective; or
   an implementation of the execution objective.

6. A data processing apparatus, wherein the apparatus comprises:
a processing module, configured to: obtain scenario information based on sensor data and a first prompt text by using a first language model, wherein the sensor data is data collected from an ambient environment of a target object, the first prompt text indicates to extract, based on the sensor data, scenario information of a scenario in which the target object is located, and the target object is a vehicle or a robot; generate a second prompt text based on the scenario information and a current execution objective of the target object by using a second language model, wherein the second prompt text indicates a query for information that needs to be known by the target object when the target object completes the execution objective and that is not comprised in the scenario information; obtain, based on the sensor data and the second prompt text by using the first language model, a reply text corresponding to the second prompt text; and obtain a control instruction of the target object based on the reply text, the scenario information, and the current execution objective by using the second language model.

7. The apparatus according to claim 6, wherein the scenario information comprises information that indicates a scenario category and/or information about a sensing element comprised in the scenario.

8. The apparatus according to claim 6 or 7, wherein the target object is the vehicle, and the apparatus further comprises:

   an obtaining module, configured to: receive a navigation instruction of a user; and
   obtain the current execution objective of the target object based on a current position of the vehicle and according to the navigation instruction.

9. The apparatus according to any one of claims 6 to 8, wherein the target object is the robot, and the apparatus further comprises:

   the obtaining module, configured to: receive a task instruction of the user; and
   the processing module is further configured to obtain the current execution objective of the target object based on a current posture of the robot and scenario map information and according to the task instruction.

10. The apparatus according to any one of claims 6 to 9, wherein the information that needs to be known and that is not comprised in the scenario information comprises:

    status information of a sensing element that is associated with the execution objective; or
    an implementation of the execution objective.

11. A data processing apparatus, comprising a memory and a processor, wherein the memory stores code, the processor is configured to execute the code, and when the code is executed, the server performs the method according to any one of claims 1 to 5.

12. A computer storage medium, wherein the computer storage medium stores a computer program, and when the program is executed by a computer, the computer is enabled to implement the method according to any one of claims 1 to 5.

13. A computer program product, wherein the computer program product stores instructions, and when the instructions are executed by a computer, the computer is enabled to implement the method according to any one of claims 1 to 5.

14. A chip, comprising a processor, wherein the processor is configured to support a data processing apparatus in implementing the method according to any one of claims 1 to 5.

FIG. 1a

IT value chain

Intelligent information chain

Smart product and industry application

General capability

Speech/Vision/Image/...

Translation/Text analysis/...

Searching/ Inference/ Decision-making

...

Data training/Machine learning/Deep learning

Data processing:

Data

Basic platform

...

Smart chip

Sensor

Infrastructure

**Autonomous driving apparatus 100**

**Travel system 102**
- Engine 118
- Transmission apparatus 120
- Energy source 119
- Wheels 121

**Sensing system 104**
- Positioning system 122
- Inertial measurement unit 124
- Radar 126
- Laser rangefinder 128
- Camera 130

**Control system 106**
- Steering system 132
- Throttle 134
- Brake unit 136
- Sensor fusion algorithm 138
- Computer vision system 140
- Route control system 142
- Obstacle avoidance system 144

**Peripheral device 108**
- Wireless communication system 146
- Vehicle-mounted computer 148
- Microphone 150
- Speaker 152

**Computer system 112**
- Processor 113
- Memory 114
  - Instructions 115

Power supply 110

User interface 116

FIG. 1b

FIG. 1c

500

Data collection device 560

Data flow

Database 530

Training device 520

Data flow

Execution device 510

Input data

Client device 540

I/O interface 512

Target model/ rule 501

Computing module 511

Data storage system 550

Output a result

Preprocessing module 513

Preprocessing module 514

FIG. 1d

Obtain scenario information based on sensor data and a first prompt text by using a first language model, where the sensor data is data collected from an ambient environment of a target object, the first prompt text indicates to extract, based on the sensor data, scenario information of a scenario in which the target object is located, and the target object is a vehicle or a robot — 201

Generate a second prompt text based on the scenario information and a current execution objective of the target object by using a second language model, where the second prompt text indicates a query for information that needs to be known by the target object when the target object completes the execution objective and that is not included in the scenario information — 202

Obtain, based on the sensor data and the second prompt text by using the first language model, a reply text corresponding to the second prompt text — 203

Obtain a control instruction of the target object based on the reply text, the scenario information, and the current execution objective by using the second language model — 204

FIG. 2

FIG. 3

EP 4 708 072 A1

400

402 401

Obtaining module ●——● Processing module

FIG. 4

500

Execution device

Antenna Antenna

Receiver 501 Transmitter 502

Processor 503

Memory 504

Application processor 5031

Communication processor 5032

FIG. 5

600

Server

619 — Central processing unit    Power supply — 626

Wired or wireless network interface — 650

Operating system — 641

Data — 644

Wired or wireless network interface

Application — 642

Input/Output interface — 658

Storage medium — 630

Memory — 632

FIG. 6

EP 4 708 072 A1

| | | Weight memory 702 |
|---|---|---|

Host CPU

External memory

Input memory 701 → Operation circuit 703

Vector computing unit 707 ↔ Accumulator 708

Direct memory access controller 705 → Unified memory 706

Controller 704 ← Instruction fetch buffer 709

Bus interface unit 710

Neural-network processing unit 700

FIG. 7

## INTERNATIONAL SEARCH REPORT

| International application No. |
|---|
| **PCT/CN2024/095786** |

| A. | CLASSIFICATION OF SUBJECT MATTER |
|---|---|

G06F 16/332(2019.01)i; G06V20/58(2022.01)n

According to International Patent Classification (IPC) or to both national classification and IPC

| B. | FIELDS SEARCHED |
|---|---|

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, CNTXT, VEN, ENTXT, WPABSC, CNKI, GOOGLE: 车, 机器人, 第一, 第二, 语言模型, 生成模型, 交互, 目标, 任务, 场景, 查询, 检索, 搜索, 回复, 提示词, 提示文本, 决策, 控制, 自动驾驶, 自动控制, car, robot, language model, generat+ model, llm, GPT, GLM, interaction, task, scene, query, search, retrieval, answer, reply, prompt, decision, auto, control, pilot

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116701586 A (HUAWEI TECHNOLOGIES CO., LTD.) 05 September 2023 (2023-09-05) entire document | 1-14 |
| A | CN 114417086 A (BEIKE ZHAOFANGWANG (BEIJING) INFORMATION TECHNOLOGY CO., LTD.) 29 April 2022 (2022-04-29) entire document | 1-14 |
| A | CN 111816165 A (SOUNDAI TECHNOLOGY CO., LTD.) 23 October 2020 (2020-10-23) entire document | 1-14 |
| A | CN 115599896 A (SHANDONG NEW GENERATION INFORMATION INDUSTRY TECHNOLOGY RESEARCH INSTITUTE CO., LTD.) 13 January 2023 (2023-01-13) entire document | 1-14 |
| A | US 2023056475 A1 (TOYOTA RESEARCH INSTITUTE, INC.) 23 February 2023 (2023-02-23) entire document | 1-14 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 July 2024** | **31 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/095786** |

**C. DOCUMENTS CONSIDERED TO BE RELEVANT**

| Category* | Citation of document, with indication, where appropriate, of the relevant passages | Relevant to claim No. |
|---|---|---|
| A | WO 2022205211 A1 (HUAWEI TECHNOLOGIES CO., LTD.) 06 October 2022 (2022-10-06) entire document | 1-14 |

Form PCT/ISA/210 (second sheet) (July 2022)

EP 4 708 072 A1

## INTERNATIONAL SEARCH REPORT
### Information on patent family members

International application No.

**PCT/CN2024/095786**

| Patent document cited in search report | | | Publication date (day/month/year) | Patent family member(s) | | | Publication date (day/month/year) |
|---|---|---|---|---|---|---|---|
| CN | 116701586 | A | 05 September 2023 | None | | | |
| CN | 114417086 | A | 29 April 2022 | None | | | |
| CN | 111816165 | A | 23 October 2020 | None | | | |
| CN | 115599896 | A | 13 January 2023 | None | | | |
| US | 2023056475 | A1 | 23 February 2023 | None | | | |
| WO | 2022205211 | A1 | 06 October 2022 | CN | 113226886 | A | 06 August 2021 |

Form PCT/ISA/210 (patent family annex) (July 2022)

34

**REFERENCES CITED IN THE DESCRIPTION**

**Patent documents cited in the description**

- CN 202310645412X